# FASCICULE DE BREVET EUROPEEN

(11) **EP 2 091 338 B1**
(45) Date de publication et mention de la délivrance du brevet: **14.11.2018**
(21) Numéro de dépôt: 07858446.3
(22) Date de dépôt: 15.10.2007
(51) Int. Cl.: A23C 1/10, A23C 9/16, A23L 3/52, B01J 2/20, A23L 2/39, A23L 2/54, A23P 30/20, A23L 7/10, A23P 10/40

(54) **PROCÉDÉ DE PRODUCTION EN CONTINU D'UN PRODUIT POREUX EN POUDRE**
VERFAHREN FÜR DIE KONTINUIERLICHE HERSTELLUNG EINES PORÖSEN PULVERPRODUKTS
METHOD FOR THE CONTINUOUS PRODUCTION OF A POROUS POWDERED PRODUCT

(30) Priorité: 16.10.2006 FR 0609055
(43) Date de publication de la demande: 26.08.2009
(73) Titulaire: Clextral, 42700 Firminy (FR)
(72) Inventeur: DURAND, Daniel, 42500 Le Chambon Feugerolles (FR); BOUVIER, Jean-Marie, 42000 Saint Etienne (FR); MALLER, Gilles, 42680 Saint-marcellin-en-forez (FR); SCOTT, Maxwell, Berwick Victoria, 3806 (AU); STEVENSON, Stewart, Matakohe, RD1 (NZ); ROBERTS, Steven, Raumati South (NZ); BRISSET, Alain, 42240 Unieux (FR)
(74) Mandataire: Lavoix
(86) Numéro de dépôt international: PCT/FR2007/001684
(87) Numéro de publication internationale: WO 2008/046996

(56) Documents cités:
- EP-A- 1 133 923
- WO-A-2006/032797
- FR-A1- 2 875 589

## Description

La présente invention concerne un procédé de production d'un produit poreux en poudre à partir d'au moins un produit initial pulvérulent et/ou visqueux.

On connaît des procédés de production de produits en poudre qui permettent de déshydrater un produit visqueux et en même temps d'en faire une poudre poreuse. Avec ces procédés, on obtient par exemple du lait en poudre ou des boissons instantanées réhydratables.

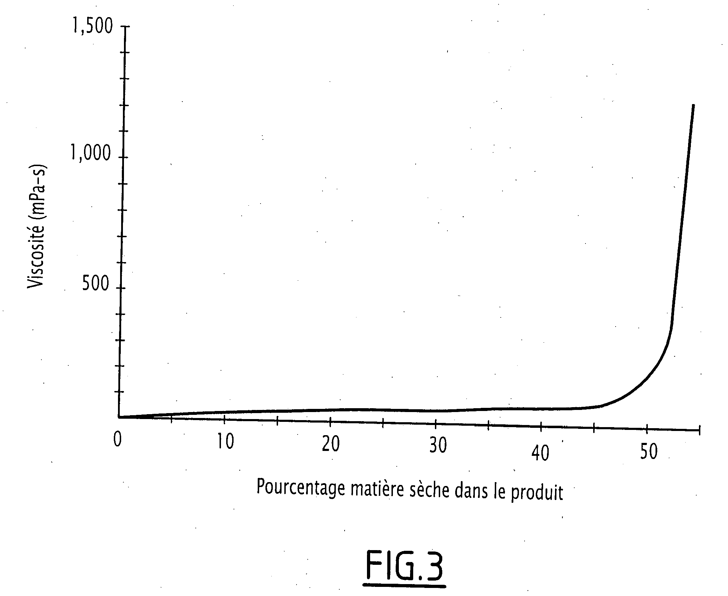

Ce genre de produits présente un comportement rhéologique particulier qui se caractérise par des courbes de viscosité en fonction de la teneur en matière sèche de type exponentiel qui présentent un point d'inflexion très marqué à partir d'une certaine teneur en matière sèche. Par exemple, pour le lait écrémé présenté en figure 3, ce point d'inflexion se situe autour de 50% en matière sèche.

Les technologies et procédés connus qui permettent l'obtention du produit en dessous du point d'inflexion de ces courbes, ne peuvent plus être extrapolés au-delà de ce point.

On connaît dans le document CH-A-86838 qui revendique un mode de séchage continu sur des tapis d'un produit liquide d'origine laitière aéré à environ 48% maximum de teneur en matière sèche. Ce procédé a notamment pour inconvénient d'être limité en teneur en matière sèche de manière à respecter une viscosité relativement basse permettant de préserver la qualité du produit d'origine laitière.

Un procédé connu est la lyophilisation ou cryodessication qui est un procédé statique de séchage ou d'élimination de l'eau par sublimation à basse température et sous vide. Ce procédé s'adresse à des produits à l'état liquide, mais aussi à des produits solides humides. Mais il a pour inconvénient d'être très onéreux et de manquer de productivité.

On connaît également un procédé de séchage par des rouleaux chauffés qui permet de déshydrater complètement des liquides ou des suspensions solide-liquide mais dont la viscosité doit être faible pour permettre la mise en forme en couche mince sur les rouleaux. De façon générale, la teneur en matière sèche est limitée. Par exemple, cette limite pour le lait est de l'ordre de 50%. De plus, la poudre obtenue est peu poreuse et non réhydratable instantanément.

Ces procédés connus présentent tous des inconvénients majeurs. Ils sont limités technologiquement par la viscosité du produit à sécher, c'est-à-dire par sa teneur en matière sèche ou ils sont limités au regard des fonctionnalités du produit fini, notamment en matière de réhydratation instantanée. Enfin, ils sont généralement très onéreux à mettre en oeuvre.

Un autre procédé connu est le séchage par atomisation qui permet de déshydrater des produits liquides plus ou moins concentrés. Ce procédé a également pour inconvénient d'être relativement onéreux, à cause des coûts d'investissement et des coûts opératoires énergétiques. Surtout le procédé est limité par la viscosité du produit initial qui doit être relativement faible car il faut pulvériser ou atomiser le produit en très fines gouttelettes de manière à avoir une surface d'échange thermique entre l'air chaud et le produit, la plus grande possible. Ces conditions d'atomisation sont limitées par la viscosité du produit de départ et donc sa teneur en matière sèche. Dans le cas du lait, le produit de départ présente au maximum une teneur en matière sèche de l'ordre de 50 à 55%.

Au-delà, ce procédé ne permet pas de travailler un produit à haute viscosité ou à haute teneur en matière sèche qui est difficilement transportable au cours des différentes étapes par pompage sans mettre en oeuvre des pressions énormes et donc des équipements sophistiqués, lourds et onéreux.

Pour remédier à ces inconvénients, on connaît dans le document WO 2006/032797 un procédé de préparation d'un produit en poudre, à partir du produit à l'état liquide. Dans ce procédé, on effectue un séchage en continu par traitement thermomécanique, à partir d'une machine de traitement thermomécanique dans laquelle on injecte simultanément le produit sous forme liquide préconcentré et une proportion déterminée de produit en poudre de la même famille que le produit liquide préconcentré, pour obtenir à l'issu du mélange un produit visqueux ou pâteux dont la concentration en matière sèche varie entre 70 et 85%, et de préférence comprise entre 80 et 85%. La machine de traitement thermomécanique réalise donc le mélange du produit liquide préconcentré et du produit en poudre de la même famille selon une opération de plastification-mélange par cisaillement en régime laminaire.

Cette opération de plastification-mélange est réalisable au plan purement technique, mais elle conduit à un produit final notablement dégradé au niveau de ses propriétés fonctionnelles notamment sur le plan de sa porosité et de sa solubilité instantanée. Cette dégradation est d'autant plus importante que le taux d'incorporation du produit en poudre est élevé, en raison de l'impact du cisaillement mécanique sur celui-ci. Par ailleurs, l'injection de gaz au cours d'une étape de foisonnement n'apporte pas d'amélioration suffisante sur les propriétés fonctionnelles du produit final d'autant plus que la concentration en matière sèche du produit est élevée.

Le problème à résoudre réside donc dans la nécessité de manipuler un produit très visqueux et de l'aérer en structurant sa porosité.

Ce problème est facilement résolu sur des produits peu visqueux, par contre il est très difficile de le résoudre avec des produits très visqueux.

Il y a donc antagonisme entre la nécessité de manipuler un produit très visqueux et de l'aérer en faisant entrer un gaz dans le produit et encore plus de le disperser dans sa masse.

Les procédés connus et utilisés jusqu'à présent ne permettent donc pas d'obtenir un produit poreux en poudre à partir du produit très visqueux dans des conditions techniques et économiques satisfaisantes.

L'invention a pour but de proposer un procédé qui permet de résoudre ce problème en obtenant un produit en poudre qui présente de bonnes caractéristiques de porosité, et de solubilité instantanée, et de densité apparente, tout en améliorant la productivité et en diminuant les coûts énergétiques.

L'invention a donc pour objet un procédé de production d'un produit poreux en poudre, à partir d'au moins un produit pulvérulent et/ou visqueux, tel que défini à la revendication 1.

D'autres caractéristiques de l'invention sont données aux revendications dépendantes.

D'autres caractéristiques et avantages de l'invention apparaîtront au cours de la description qui va suivre, faite en référence aux dessins annexés, sur lesquels :
- la Fig. 1 est une vue schématique en élévation d'une installation de production d'un produit poreux en poudre, à partir d'un produit initial à l'état visqueux, conforme à l'invention,
- la Fig. 2 est une vue schématique en élévation d'une installation de production d'un produit poreux en poudre à partir d'un produit initial pulvérulent et avec un mélange avec un produit visqueux, conforme à l'invention,
- la Fig. 3 est une courbe montrant l'évolution de la viscosité d'un produit, comme par exemple du lait écrémé.

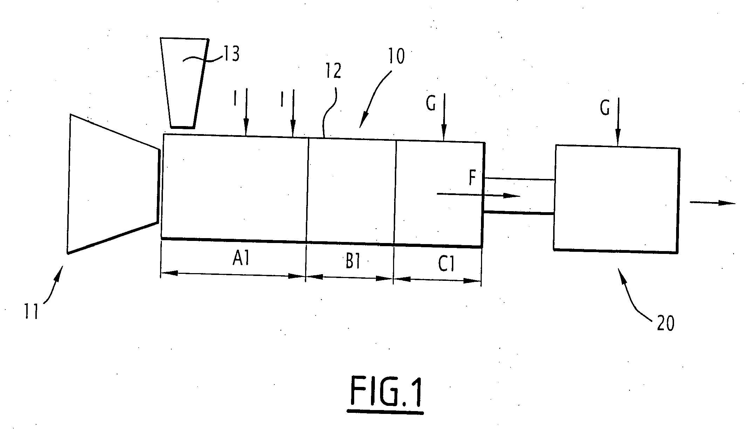

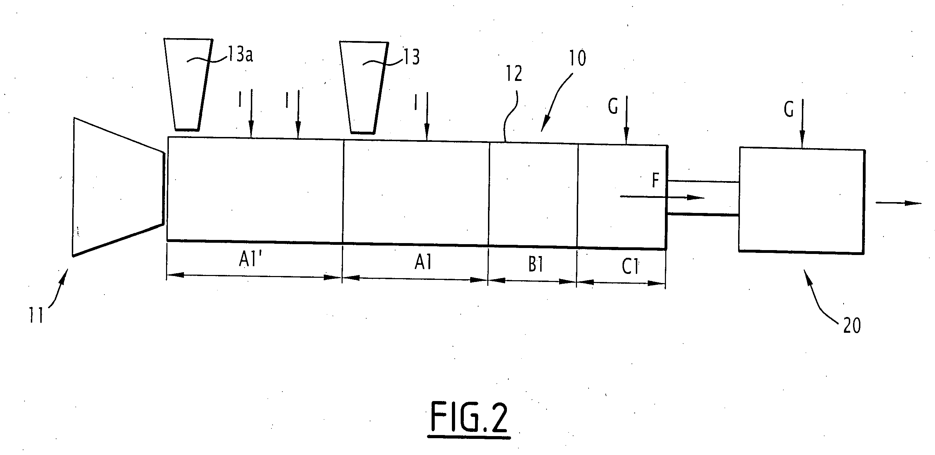

Sur les Figs. 1 et 2, on a représenté schématiquement une installation de production en continu d'un produit poreux en poudre à partir d'au moins un produit pulvérulent et/ou visqueux, qui comprend deux éléments principaux placés l'un à la suite de l'autre, une machine de traitement thermomécanique désignée dans son ensemble par la référence 10 et un appareil d'aération statique ou dynamique désigné par la référence générale 20, de mélange du produit sortant de la machine de traitement thermomécanique 10 avec un gaz, comme on le verra ultérieurement.

La machine de traitement thermomécanique est constituée de préférence par une machine d'extrusion 10 à deux vis co-rotatives et co-pénétrantes.

Dans ce cas et de manière connue, la machine d'extrusion 10 comprend deux vis, non représentées, entraînées en rotation autour de leurs axes par un moteur et un réducteur, désignés par la référence générale 11, à l'intérieur d'une enceinte allongée formant un fourreau 12 qui les enveloppe. Les vis de la machine d'extrusion 10 sont munies notamment de filets hélicoïdaux ou d'autres éléments de traitement du produit introduit dans le fourreau 12 et qui engrènent les uns dans les autres. Les filets hélicoïdaux ou les éléments composant les vis de la machine d'extrusion 10 déterminent différentes zones de traitement du produit introduit dans le fourreau 12.

Le produit initial est constitué par :
- un produit visqueux présentant un taux de matière sèche compris entre 50 et 90% et une viscosité supérieure à 100 mPa.s et de préférence supérieure à 200 mPa.s (Fig. 1), ledit produit visqueux étant de la même famille que le produit à obtenir, ou
- au moins un produit pulvérulent présentant un taux de matière sèche compris entre 70 et 98% et mélangé avec un produit visqueux présentant un taux de matière sèche compris entre 50 et 90% et une viscosité supérieure à 100 mPa.s et de préférence supérieure à 200 mPa.s (Fig. 2), ou
- au moins un produit pulvérulent présentant un taux de matière sèche compris entre 70 et 98%.

Le fourreau 12 est muni à son extrémité amont par rapport au sens d'écoulement du produit indiqué par la flèche F, d'un orifice d'alimentation, non réprésenté, surmonté de moyens 13 d'introduction dans la machine d'extrusion 10 du produit à traiter.

D'une manière générale, le produit initial subit dans la machine d'extrusion 10 et dans l'appareil d'aération 20 différents traitements et différentes modifications pour obtenir un produit poreux en poudre se présentant sous la forme de particules aérées et poreuses.

En se reportant maintenant à la Fig. 1, on va décrire l'installation 10 dans le cas où le produit initial est un produit visqueux de la même famille que le produit final obtenu. Dans ce cas, ce produit initial à l'état visqueux est préparé avant son introduction dans la machine d'extrusion 10.

La machine d'extrusion 10 se compose de plusieurs zones comprenant selon la nature du produit initial :
- une première zone A1 qui est une zone de transport du produit ou riche en matière sèche et/ou une zone de mélange avec au moins un ingrédient et une zone de traitement thermique,
- une deuxième zone B1 qui est une zone de transport du produit à l'état visqueux issue de la zone A1, cette zone B1 est une zone de transport, de cisaillement et de traitement thermique du produit,
- une troisième zone C1 dans laquelle on abaisse la viscosité du produit à l'état visqueux et on initie simultanément de la porosité dans ce produit à l'état visqueux, cette troisième zone C1 étant également une zone de traitement thermique du produit.

Dans la zone A1 de la machine d'extrusion 10, différents ingrédients I peuvent être introduits par un ou plusieurs orifices ménagés dans le fourreau 12, comme par exemple de la lécithine et/ou de l'eau et/ou des arômes et/ou des colorants ou d'autres ingrédients appropriés de façon à les mélanger avec le produit initial.

Dans la zone C1, le fourreau 12 de la machine d'extrusion 10 comporte au moins un orifice d'injection à l'intérieur dudit fourreau 12, d'un gaz G qui est mélangé intimement avec le produit à l'état visqueux de façon à abaisser la viscosité de ce produit à l'état visqueux sans changer son taux de matière sèche.

Simultanément à cet abaissement de la viscosité du produit à l'état visqueux, on initie, grâce à l'injection de ce gaz de la porosité dans le produit à l'état visqueux. Le mélange intime du produit à l'état visqueux et du gaz est facilité par le malaxage de ce produit dans les vis co-pénétrantes et co-rotatives de la machine d'extrusion 10.

Le gaz injecté dans la zone C1 de la machine d'extrusion 10 est par exemple du gaz carbonique, de l'air, de la vapeur d'eau, de l'azote ou un de ses oxydes.

A titre d'exemple, les vis de la machine d'extrusion 10 sont entraînées en rotation à une vitesse comprise entre 50 et 1200 t/mn et la zone C1 présente par exemple un rapport L/D entre la longueur L de cette zone C1 et le diamètre D des vis de la machine d'extrusion compris entre 3 et 12.

Le produit à la sortie de la machine de traitement thermomécanique présente une concentration en matière sèche comprise entre 50 et 90%.

A la sortie de la machine d'extrusion 10, le produit à l'état visqueux dont la viscosité a été abaissée dans la zone C1 de cette machine d'extrusion 10, est directement transféré en continu et sans mise à l'air libre dans l'appareil d'aération 20 statique ou dynamique.

Dans cet appareil d'aération 20, on intensifie le mélange intime du produit à l'état visqueux avec un gaz pour obtenir une masse aérée et poreuse.

Dans cet appareil 20, le gaz injecté est par exemple du gaz carbonique, de l'air, de la vapeur d'eau, de l'azote ou un de ses oxydes.

Dans le cas d'un appareil d'aération statique, l'appareil 20 est constitué par exemple par un mélangeur à hélices et dans le cas d'un appareil d'aération dynamique, l'appareil 20 est constitué par un appareil muni de pales d'agitation.

L'ensemble du traitement du produit à l'état visqueux dans la machine d'extrusion 10 et dans l'appareil d'aération 20 est réalisé de façon continue et sans mise à l'air libre du produit.

Ainsi, l'appareil 20 est placé directement sur la sortie de la machine d'extrusion 10 ou est relié à cette sortie de la machine d'extrusion 10 par un élément de liaison constitué par exemple par au moins un tube étanche et continu.

A la sortie de l'appareil 20, l'installation comporte un moyen de séparation de la masse aérée et poreuse ainsi obtenue de façon à obtenir des particules aérées et poreuses qui sont inférieures à 3 mm et de préférence inférieure à 2 mm. Ce moyen de séparation est constitué par exemple par des orifices ménagés à la sortie de l'appareil 20.

Le pourcentage de gaz au total injecté dans la machine d'extrusion 10 exprimé en volume par rapport à la masse sèche du produit traité dans ladite machine 10 est compris entre 0,01 nL.kg⁻¹.mn⁻¹ et 10 nL.kg⁻¹.mn⁻¹, le volume de gaz étant exprimé dans les conditions normales de température et de pression.

Le gaz injecté dans la zone C1 représente 30 à 60% de la totalité du gaz injecté dans l'installation et le gaz injecté dans l'appareil 20 représente 40 à 70% de la totalité du gaz injecté.

Les particules ainsi obtenues présentent une concentration en matière sèche comprise entre 50 et 90%, une solubilité supérieure à 90% et une porosité interne supérieure à 50%.

A la sortie de l'appareil d'aération 20, l'installation peut comporter un appareil de séchage des particules aérées et poreuses et cet appareil de séchage est formé par au moins un sécheur à lit fluidisé ou par au moins une tour d'atomisation ou par un sécheur vertical à contre-courant ou par un sécheur à tapis. Après ce séchage complémentaire, les particules présentent une concentration en matière sèche de l'ordre de 96%.

En se reportant maintenant à la Fig. 2, on va décrire l'installation 10 dans le cas où le produit initial est au moins un produit pulvérulent.

La machine d'extrusion 10 se compose de plusieurs zones comprenant selon la nature du produit initial :
- une première zone A'1 qui est une zone de transport dudit au moins produit pulvérulent et/ou une zone de mélange avec au moins un ingrédient et/ou une zone de traitement thermique dans laquelle le produit est porté à une température comprise entre 20 et 80°C,
- une deuxième zone A1 qui est une zone de mélange du produit issu de la zone A'1 avec un produit visqueux de la même famille que le produit final à obtenir et de traitement thermique du mélange porté à une température comprise entre 40 et 200°C, ledit produit visqueux présentant un taux en matière sèche compris entre 50 et 90% et une viscosité supérieure à 100 mPa.s et de préférence supérieure à 200 mPa.s,
- une troisième zone B1 qui est une zone de transport et de cisaillement du produit à l'état visqueux et dans laquelle ce produit à l'état visqueux est maintenu à une température comprise entre 40 et 200°C, et
- une quatrième zone C1 dans laquelle on abaisse la viscosité du produit à l'état visqueux et on initie simultanément de la porosité dans ce produit à l'état visqueux en maintenant ce produit à une température comprise entre 40 et 200°C.

Le fourreau 12 est muni au début de la zone A'1 d'un orifice d'alimentation, non représenté, surmonté de moyens 13a d'introduction dans la machine d'extrusion 10 du produit à traiter.

Dans les zones A'1 et A1 de la machine d'extrusion de la Fig. 2, différents ingrédients I peuvent être introduits par un ou plusieurs orifices ménagés dans le fourreau 12, comme par exemple de la lécithine et/ou de l'eau et/ou des arômes et/ou des colorants ou d'autres ingrédients appropriés de façon à les mélanger avec le produit initial.

De manière analogue à la zone C1 du premier mode de réalisation représenté à la Fig. 1, le fourreau 12 de la machine d'extrusion du second mode de réalisation représenté à la Fig. 2 comporte au moins un orifice d'injection à l'intérieur dudit fourreau, d'un gaz G qui est mélangé intimement avec un produit à l'état visqueux de façon à abaisser la viscosité de ce produit a l'état visqueux sans changer son taux de matière sèche.

Le gaz injecté dans la zone C1 de la machine d'extrusion 10 est par exemple du gaz carbonique, de l'air, de la vapeur d'eau, de l'azote ou un de ses oxydes.

La vitesse de rotation des vis de la machine d'extrusion 10 est identique au précédent mode de réalisation et les caractéristiques des vis sont analogues.

A la sortie de la machine d'extrusion 10, le produit à l'état visqueux dont la viscosité a été abaissée dans la zone C1 de cette machine d'extrusion 10, est également directement transféré en continu et sans mise à l'air libre dans l'appareil d'aération 20 statique ou dynamique identique au précédent mode de réalisation.

Dans cet appareil d'aération 20, on intensifie le mélange intime du produit à l'état visqueux avec un gaz pour obtenir une masse aérée et poreuse.

Dans cet appareil 20, le gaz injecté est par exemple du gaz carbonique, de l'air, de la vapeur d'eau, de l'azote ou un de ses oxydes.

Le gaz injecté dans la zone C1 du mode de réalisation de la Fig. 2, représente 10 à 80% du gaz total injecté dans l'installation et le gaz injecté dans l'appareil 20 représente 20 à 90% de la totalité du gaz injecté.

Les particules ainsi obtenues ont à la sortie de l'appareil 20 une température comprise entre 20 et 90°C et une granulométrie inférieure ou égale à 3 mm.

L'installation peut aussi comporter un appareil de séchage des particules aérées et poreuses à la sortie de l'appareil d'aération 20 et les particules obtenues présentent une concentration en matière sèche de l'ordre de 96%.

Le gaz injecté dans la machine d'extrusion 10 peut être identique ou différent du gaz injecté dans l'appareil 20.

D'une façon générale, on effectue un premier mélange du produit à l'état visqueux avec un gaz dans la machine de traitement thermomécanique 10 et un second mélange du produit à l'état visqueux avec un gaz dans l'appareil d'aération 20. Ce second mélange dans l'appareil d'aération 20 est réalisé sous pression.

Selon un premier exemple, le produit à l'état visqueux est du lait, ce par quoi on obtient du lait en poudre.

Selon un deuxième exemple, le produit à l'état visqueux est un produit amylacé, natif ou modifié (physiquement et/ou chimiquement) à base de farines de céréales (blé, avoine, maïs, orge, etc....), de farine de pomme de terre, de granules de pomme de terre, de flocons de pomme de terre, et/ou de farine de tapioca, le produit étant initialement sous la forme d'un mélange du type solution, suspension ou émulsion en milieu aqueux, ce par quoi on obtient à l'issu du procédé le produit sous forme pulvérulente.

Selon un troisième exemple, le produit à l'état visqueux est un produit protéinique, natif ou modifié (physiquement et/ou chimiquement), choisi parmi la caséine du lait, le gluten du blé, la zéine du maïs, les protéines de soja, les protéines de légumineuses, en particulier de pois et/ou les protéines d'oléaprotéagineux, en particulier de tournesol ou de colza, le produit étant initialement sous la forme d'un mélange du type solution, suspension ou émulsion en milieu aqueux, ce par quoi on obtient à l'issu du procédé le produit sous forme pulvérulente.

Selon un quatrième exemple, le produit à l'état visqueux est un co-produit/sous- produit de fractionnement du lait, obtenu par fractionnement du lait par centrifugation, filtration, nanofiltration, ultrafiltration, et/ou osmose inverse ou un co-produit obtenu par coagulation du lait.

D'une manière générale, le procédé selon l'invention mis en oeuvre par l'installation qui associe une machine d'extrusion dans laquelle on abaisse la viscosité et on initie de la porosité et un appareil d'aération statique ou dynamique dans lequel on poursuit l'augmentation de la porosité du produit, permet donc de travailler des produits très visqueux et de l'aérer en structurant sa porosité ce qui n'est pas le cas avec les procédés utilisés jusqu'à présent.

En effet, et comme représenté à la Fig. 3, à titre d'exemple, qui montre l'évolution de la viscosité d'un produit comme le lait écrémé en fonction de son pourcentage de matière sèche, on voit que la viscosité du produit augmente de façon exponentielle à partir d'une teneur de 50% de matière sèche. Pour d'autres produits, les courbes peuvent être différentes mais montrent la même augmentation exponentielle, avec un point d'inflexion marqué correspondant à une teneur en matière sèche comprise généralement entre 10 et 90%, selon la nature et la composition des solutions, suspensions ou émulsions considérées.

Les solutions technologiques connues jusqu'à présent qui permettent de traiter le produit en dessous du point d'inflexion de la courbe ne conviennent plus au-delà.

Dans le cas du lait écrémé par exemple, on voit bien qu'un saut technologique doit être imaginé et mis en oeuvre pour pouvoir transporter, mélanger, aérer ce produit à une teneur en matière sèche supérieure à 50% à cause de sa viscosité qui devient très élevée.

Le procédé et l'installation selon l'invention permettent donc de manipuler et de traiter des produits très visqueux ayant une concentration en matière sèche comprise entre 50 et 90% et d'obtenir des particules aérées et poreuses qui présentent de bonnes caractéristiques de porosité, de mouillabilité, de solubilité instantanée et de densité apparente.

Selon la nature du produit, le taux de matière sèche peut varier entre 10 et 90% avec une viscosité supérieure à 100 mPa.s.

De plus, le procédé et l'installation selon l'invention permettent d'améliorer la productivité, tout en diminuant les coûts énergétiques.

Selon une variante, le produit initial peut être constitué par au moins un produit pulvérulent présentant un taux en matière sèche compris entre 70 et 98% sans être mélangé avec un produit à l'état visqueux. Dans ce cas, l'installation est identique à l'installation de la Fig. 2.

### EXEMPLES

### A. LAIT EN POUDRE

- Produit initial : Lait concentré avec une concentration de matière sèche de 65% et ayant une viscosité supérieure à 1000 mPa.s.
- Machine d'extrusion 10 :
   - Zone A : mélange éventuel avec de la lécithine
   - Zone C : injection de 50% de la totalité du gaz
   - Température du produit inférieure à 50°C
- Appareil d'aération 20
   - Injection de 50% de la totalité du gaz
   - Température du produit inférieure à 50°C
- Particules obtenues inférieures à 2mm avec une concentration de matière sèche comprise entre 65 et 85%.

### B. BOISSONS INSTANTANEES

### 1^{er} Exemple

- Produit initial : Farine d'avoine 55% - Sucre 37% - chocolat en poudre 8%.
- Machine d'extrusion
   - Zone A : mélange avec de l'eau
      Température du produit comprise
      entre 120 et 150°C
   - Zone B : Produit visqueux avec une concentration en matière sèche comprise entre 60 et 70%.
      Température du produit comprise entre 120 et 150°C.
   - Zonce C : Injection de gaz carbonique 80% de la totalité du gaz. Température du produit de l'ordre de 70°C.
- Appareil d'aération 20
   - Injection de gaz carbonique 20% de la totalité du gaz
   - Température du produit de l'ordre de 60°C.
- Particules obtenues inférieure à 3mm avec une concentration en matière sèche comprise entre 60 et 80%.

### 2^{ème} Exemple

- Produit initial : Farine de maïs 91,5% - Amidon de manioc 8% - Carbonate de calcium 0,5%.
- Machine d'extrusion
   - Zone A : mélange avec de l'eau
      Température du produit comprise
      entre 60 et 100°C
   - Zone B : Produit visqueux avec une concentration en matière sèche comprise entre 60 et 80%.
      Température du produit comprise entre 120 et 150°C.
   - Zonce C : Injection de gaz carbonique 90% de la totalité du gaz. Température du produit entre 150 et 200°C.
- Appareil d'aération 20
   - Injection de gaz carbonique 10% de la totalité du gaz
   - Température du produit de l'ordre de 90°C.
- Particules obtenues inférieure à 3mm avec une concentration en matière sèche comprise entre 70 et 90%.

## Revendications

1. Procédé de production d'un produit poreux en poudre, à partir d'au moins un produit initial pulvérulent et/ou visqueux, **caractérisé en ce que** l'on réalise les étapes suivants en continu et sans mise à l'air libre :
a) on prépare le produit initial pour l'amener dans un état visqueux de viscosité supérieure à 100 mPa.s, et de préférence supérieure à 200 mPa.s
b) dans une machine de traitement thermomécanique (10) destinée à assurer en continu au moins des fonctions de transport et/ou de mélange pour des produits visqueux ou riches en matière sèche :
- on abaisse la viscosité du produit à l'état visqueux sans changer son taux de matière sèche par un premier mélange intime avec un gaz injecté dans la machine de traitement thermomécanique (10), et
- on initie simultanément de la porosité dans le produit à l'état visqueux,
c) en continuité avec la machine de traitement thermomécanique (10), on intensifie le mélange intime de manière statique ou dynamique du produit à l'état visqueux par un second mélange avec un gaz pour obtenir une masse aérée et poreuse, et
d) on divise cette masse pour obtenir des particules aérées et poreuses ayant un taux de matière sèche compris entre 50 et 90% et une granulométrie inférieure ou égale à 3 mm.

2. Procédé selon la revendication 1, **caractérisé en ce que** l'on prépare le produit à l'état visqueux dans la machine de traitement thermomécanique (10) à partir d'au moins un produit pulvérulent présentant un taux de matière sèche compris entre 70 et 98% et en effectuant au moins une étape de mélange avec au moins un ingrédient et/ou au moins une étape de cisaillement et/ou au moins une étape de traitement thermique avant d'abaisser la viscosité du produit à l'état visqueux.

3. Procédé selon la revendication 1, **caractérisé en ce que** l'on prépare le produit à l'état visqueux dans la machine de traitement thermomécanique (10) à partir d'au moins un produit pulvérulent présentant un taux de matière sèche compris entre 70 et 98% et en effectuant au moins une étape de mélange avec au moins un ingrédient et ultérieurement une étape de mélange avec un produit à l'état visqueux et/ou au moins une étape de cisaillement et/ou au moins une étape de traitement thermique avant d'abaisser la viscosité du produit à l'état visqueux.

4. Procédé selon la revendication 1, **caractérisé en ce que** l'on prépare le produit à l'état visqueux de la même famille que le produit à obtenir avant son introduction dans la machine de traitement thermomécanique (10), on introduit ce produit à l'état visqueux dans ladite machine de traitement thermomécanique (10) et avant d'abaisser la viscosité du produit à l'état visqueux, on effectue au moins une étape de mélange avec au moins un ingrédient et/ou au moins une étape de cisaillement et/ou au moins une étape de traitement thermique.

5. Procédé selon l'une quelconque des revendications 1 à 4, **caractérisé en ce que** l'on effectue les premier et second mélanges du produit à l'état visqueux et du gaz à partir d'une injection de ce gaz.

6. Procédé selon la revendication 3 ou 4, **caractérisé en ce que** le produit à l'état visqueux de la même famille que le produit à obtenir présente une viscosité supérieure à 100 mPa.s et un taux de matière sèche compris ente 50 et 90%.

7. Procédé selon l'une quelconque des revendications 1 à 6, **caractérisé en ce que** l'on effectue un séchage des particules aérées et poreuses.

8. Procédé selon la revendication 7, caractérisé en que ledit séchage est effectué par au moins un sécheur à lit fluidisé.

9. Procédé selon la revendication 7, caractérisé en que ledit séchage est effectué par au moins une tour d'atomisation.

10. Procédé selon la revendication 7, caractérisé en que ledit séchage est effectué par un sécheur vertical à contre-courant.

11. Procédé selon la revendication 7, caractérisé en que ledit séchage est effectué par un sécheur à tapis.

12. Procédé selon l'une quelconque des revendications 1 à 11, **caractérisé en ce que** les particules obtenues présentent une concentration en matière sèche de l'ordre de 96%, après séchage complémentaire.

13. Procédé selon l'une quelconque des revendications 1 à 12, **caractérisé en ce que** le gaz mélangé avec le produit à l'état visqueux dans la machine de traitement thermomécanique (10) est identique ou différent du gaz mélangé avec le produit à l'état visqueux après ladite machine.

14. Procédé selon la revendication 13, **caractérisé en ce que** le gaz est du gaz par exemple carbonique, de l'air, de la vapeur d'eau, de l'azote ou un de ses oxydes.

15. Procédé selon l'une quelconque des revendications 1 à 14, **caractérisé en ce que** le pourcentage de gaz au total injecté dans la machine de traitement thermomécanique (10) et exprimé en volume par rapport à la masse sèche du produit traité dans ladite machine est compris entre 0,01 nL.kg⁻¹. mn⁻¹ à 10 nL.kg⁻¹. mn⁻¹.

16. Procédé selon l'une quelconque des revendications 1 à 15, **caractérisé en ce qu'**au moins 10% du gaz mélangé avec le produit, est injecté dans la machine de traitement thermomécanique (10).

17. Procédé selon l'une quelconque des revendications 1 à 16, **caractérisé en ce que** le produit à l'état visqueux est du lait, ce par quoi on obtient du lait en poudre.

18. Procédé selon l'une quelconque des revendications 1 à 16, **caractérisé en ce que** le produit à l'état visqueux est un produit amylacé, natif ou modifié (physiquement et/ou chimiquement) à base de farines de céréales (blé, avoine, maïs, orge, etc...), de farine de pomme de terre, de granules de pommes de terre, de flocons de pomme de terre, et/ou de farine de tapioca, le produit étant initialement sous la forme d'un mélange du type solution, suspension ou émulsion en milieu aqueux ce par quoi on obtient à l'issue du procédé le produit sous forme pulvérulente.

19. Procédé selon l'une quelconque des revendications 1 à 16, **caractérisé en ce que** le produit à l'état visqueux est un produit protéinique, natif ou modifié (physiquement et/ou chimiquement), choisi parmi la caséine du lait, le gluten du blé, la zéine du maïs, les protéines de soja, les protéines de légumineuses en particulier de pois et/ou et les protéines d'oléaprotéagineux, en particulier de tournesol ou de colza, le produit étant initialement sous la forme d'un mélange du type solution, suspension ou émulsion en milieu aqueux ce par quoi on obtient à l'issue du procédé le produit sous forme pulvérulente.

20. Procédé selon l'une quelconque des revendications 1 à 16, **caractérisé en ce que** le produit à l'état visqueux est un co-produit/sous-produit de fractionnement du lait obtenu par fractionnement du lait par centrifugation, filtration, nanofiltration, ultrafiltration et/ou osmose inverse ou un co-produit obtenu par coagulation du lait.

21. Procédé selon l'une quelconque des revendications 1 à 20, **caractérisé en ce que** la machine de traitement thermomécanique est une machine à vis tournante(s).

22. Procédé selon l'une quelconque des revendications 1 à 21, **caractérisé en ce que** la machine de traitement thermomécanique est une machine d'extrusion (10) à deux vis co-rotatives et co-pénétrantes.

23. Procédé selon la revendication 22, **caractérisé en ce que** les vis de la machine d'extrusion (10) sont entraînées en rotation à une vitesse comprise entre 50 et 1200 t/mn.

24. Procédé selon la revendication 23, **caractérisé en ce que**, dans une zone (C1) de la machine d'extrusion (10), zone dans laquelle on abaisse la viscosité du produit à l'état visqueux et on initie simultanément de la porosité dans le produit à l'état visqueux, le rapport entre la longueur des vis et le diamètre desdites vis est compris entre 3 et 12.

25. Procédé selon l'une quelconque des revendications 1 à 21, **caractérisé en ce que** la machine de traitement thermomécanique (10) est une machine d'extrusion à simple vis.

## Patentansprüche

1. Verfahren zur Herstellung eines porösen Produkts aus Pulver, ausgehend von wenigstens einem pulverförmigen und/oder viskosen Anfangsprodukt, **dadurch gekennzeichnet, dass** man die folgenden Schritte kontinuierlich ohne Außenluftzutritt durchführt:
a) Vorbereiten des Anfangsprodukts, um es in einem viskosen Zustand mit einer Viskosität größer als 100 mPA.s, und bevorzugt größer als 200 mPa.s, bereitzustellen,
b) in einer Maschine zur thermomechanischen Behandlung (10), die dazu bestimmt ist, kontinuierlich wenigstens die Funktion/en des Transports und/oder des Mischens für die viskosen oder trockenstoffreichen Produkte zu gewährleisten:
- Absenken der Viskosität des Produkts im viskosen Zustand, ohne seinen Gehalt an Trockenstoff zu ändern durch ein erstes inniges Mischen mit einem Gas, das in die Maschine zur thermomechanischen Behandlung (10) eingespritzt wird, und
- simultanes Initiieren der Porosität in dem Produkt im viskosen Zustand,
c) im Anschluss an die Maschine zur thermomechanischen Behandlung (10), Intensivieren der innigen Mischung des Produkts im viskosen Zustand auf statische oder dynamische Weise durch ein zweites Mischen mit einem Gas zum Erlangen einer luftigen, porösen Masse, und
d) Teilen dieser Masse zum Erlangen von luftigen, porösen Partikeln, die einen Gehalt an Trockenstoff, der zwischen 50 und 90% liegt, und eine Korngrößentrennung kleiner oder gleich 3 mm haben.

2. Verfahren gemäß Anspruch 1, **dadurch gekennzeichnet, dass** man das Produkt im viskosen Zustand in der Maschine zur thermomechanischen Behandlung (10) behandelt ausgehend von wenigstens einem pulverförmigen Produkt, das einen Gehalt an Trockenstoff hat, der zwischen 70 und 98% liegt, und unter Durchführen wenigstens eines Schrittes des Mischens mit wenigstens einem Bestandteil und/oder wenigstens eines Schrittes des Scherens und/oder wenigstens eines Schrittes des thermischen Behandelns vor dem Absenken der Viskosität des Produkts im viskosen Zustand.

3. Verfahren gemäß Anspruch 1, **dadurch gekennzeichnet, dass** man das Produkt im viskosen Zustand in der Maschine zur thermomechanischen Behandlung (10) behandelt ausgehend von wenigstens einem pulverförmigen Produkt, das einen Gehalt an Trockenstoff hat, der zwischen 70 und 98% liegt, und unter Durchführen wenigstens eines Schritts des Mischens mit wenigstens einem Bestandteil und anschließend eines Schrittes des Mischens mit einem Produkt im viskosen Zustand und/oder wenigstens eines Schrittes des Scherens und/oder wenigstens eines Schrittes des thermischen Behandelns vor dem Absenken der Viskosität des Produkts im viskosen Zustand.

4. Verfahren gemäß Anspruch 1, **dadurch gekennzeichnet, dass** man das Produkt im viskosen Zustand der gleichen Familie vorbereitet wie das zu erlangende Produkt vor seiner Einführung in die Maschine zur thermomechanischen Behandlung (10), man dieses Produkt im viskosen Zustand in die besagte Maschine zur thermomechanischen Behandlung (10) eingibt und man vor dem Absenken der Viskosität des Produkts im viskosen Zustand wenigstens einen Schritt des Mischens mit wenigstens einem Bestandteil und/oder wenigstens einen Schritt des Scherens und/oder wenigstens einen Schritt des thermischen Behandelns durchführt.

5. Verfahren gemäß irgendeinem der Ansprüche 1 bis 4, **dadurch gekennzeichnet, dass** man das erste und das zweite Mischen des Produkts im viskosen Zustand und des Gases ausgehend von einer Einspritzung dieses Gases aus durchführt.

6. Verfahren gemäß dem Anspruch 3 oder 4, **dadurch gekennzeichnet, dass** das Produkt im viskosen Zustand der gleichen Familie wie das zu erlangende Produkt eine Viskosität größer als 100 mPa.s und einen Gehalt an Trockenstoff hat, der zwischen 50 und 90% liegt.

7. Verfahren gemäß irgendeinem der Ansprüche 1 bis 6, **dadurch gekennzeichnet, dass** man ein Trocknen der luftigen, porösen Partikel durchführt.

8. Verfahren gemäß Anspruch 7, **dadurch gekennzeichnet, dass** das besagte Trocknen durchgeführt wird durch zumindest einen Wirbelschichttrockner.

9. Verfahren gemäß Anspruch 7, **dadurch gekennzeichnet, dass** das besagte Trocknen durchgeführt wird durch zumindest eine Zerstäuber-Drehmaschine.

10. Verfahren gemäß Anspruch 7, **dadurch gekennzeichnet, dass** das besagte Trocknen durchgeführt wird durch einen vertikalen Gegenstrom-Trockner.

11. Verfahren gemäß Anspruch 7, **dadurch gekennzeichnet, dass** das besagte Trocknen durchgeführt wird durch einen Teppichtrockner.

12. Verfahren gemäß irgendeinem der Ansprüche 1 bis 11, **dadurch gekennzeichnet, dass** die erlangten Partikel eine Trockenstoff-Konzentration in der Größenordnung von 96% haben nach dem komplementären Trocknen.

13. Verfahren gemäß irgendeinem der Ansprüche 1 bis 12, **dadurch gekennzeichnet, dass** das Gas, das mit dem Produkt im viskosen Zustand gemischt wird in der Maschine zur thermomechanischen Behandlung (10) identisch oder verschieden ist von dem Gas, das mit dem Produkt im viskosen Zustand gemischt wird nach der besagten Maschine.

14. Verfahren gemäß Anspruch 13, **dadurch gekennzeichnet, dass** das Gas ein Gas von z.B. Kohlendioxid, Luft, Wasserdampf, Stickstoff oder eines seiner Oxide ist.

15. Verfahren gemäß irgendeinem der Ansprüche 1 bis 14, **dadurch gekennzeichnet, dass** der Gesamtanteil an Gas, das in die Maschine zur thermomechanischen Behandlung (10) eingespritzt wird, ausgedrückt in Volumen bezüglich der Trockenmasse des Produkts, das in der Maschine behandelt wird, zwischen 0,01 nL.kg⁻¹.mn⁻¹ und 10 nL.kg⁻¹.mn⁻¹ liegt.

16. Verfahren gemäß irgendeinem der Ansprüche 1 bis 15, **dadurch gekennzeichnet, dass** wenigstens 10% des Gases, das mit dem Produkt gemischt wird, in die Maschine zur thermomechanischen Behandlung (10) eingespritzt wird.

17. Verfahren gemäß irgendeinem der Ansprüche 1 bis 16, **dadurch gekennzeichnet, dass** das Produkt im viskosen Zustand Milch ist, woraus man Milchpulver erlangt.

18. Verfahren gemäß irgendeinem der Ansprüche 1 bis 16, **dadurch gekennzeichnet, dass** das Produkt im viskosen Zustand stärkehaltiges natives oder modifiziertes (physikalisch und/oder chemisch) Produkt ist auf Basis von Mehlen aus Zerealien (Weizen, Hafer, Mais, Gerste, etc...), von Kartoffel-Mehl, von Kartoffel-Granulat, von Kartoffel-Flocken und/oder von Tapioka-Mehl, wobei das Produkt anfangs in der Form einer Mischung des Typs Lösung, Suspension oder Emulsion in wässrigem Milieu ist, woraus man als Ausgang des Verfahrens das Produkt in Pulverform erlangt.

19. Verfahren gemäß irgendeinem der Ansprüche 1 bis 16, **dadurch gekennzeichnet, dass** das Produkt im viskosen Zustand ein proteinhaltiges natives oder modifiziertes (physikalisch oder chemisch) Produkt ist, das ausgewählt ist aus Milch-Kasein, Weizen-Gluten, Mais-Zein, Soja-Proteinen, Proteinen von Hülsenfrüchten, insbesondere von Erbsen, und/oder Proteinen von ölhaltigen Proteinpflanzen, insbesondere von der Sonnenblume oder dem Raps, wobei das Produkt anfänglich in der Form einer Mischung des Typs Lösung, Suspension oder Emulsion in wässrigem Milieu ist, woraus man am Ausgang des Verfahrens das Produkt in Pulverform erlangt.

20. Verfahren gemäß irgendeinem der Ansprüche 1 bis 16, **dadurch gekennzeichnet, dass** das Produkt im viskosen Zustand ein Ko-Produkt/Unter-Produkt einer Aufteilung von Milch, erlangt durch Aufteilen von Milch durch Zentrifugation, Filtration, Nanofiltration, Ultrafiltration und/oder inverser Osmose, oder ein Ko-Produkt, erlangt durch Koagulation von Milch, ist.

21. Verfahren gemäß irgendeinem der Ansprüche 1 bis 20, **dadurch gekennzeichnet, dass** die Maschine zur thermomechanischen Behandlung eine Drehschraube(n)-Maschine ist.

22. Verfahren gemäß irgendeinem der Ansprüche 1 bis 21, **dadurch gekennzeichnet, dass** die Maschine zur thermomechanischen Behandlung eine Extrudier-Maschine (10) mit zwei ko-rotierenden, ko-penetrierenden Schrauben ist.

23. Verfahren gemäß Anspruch 22, **dadurch gekennzeichnet, dass** die Schrauben der Extrudier-Maschine (10) mit einer Geschwindigkeit drehangetrieben werden, die zwischen 50 und 1200 t/mn liegt.

24. Verfahren gemäß Anspruch 23, **dadurch gekennzeichnet, dass**, in einer Zone (C1) der Extrudier-Maschine (10), in welcher Zone man die Viskosität des Produkts im viskosen Zustand absenkt und man simultan die Porosität in dem Produkt im viskosen Zustand initiiert, das Verhältnis zwischen der Länge der Schrauben und dem Durchmesser der besagten Schrauben zwischen 3 und 12 liegt.

25. Verfahren gemäß irgendeinem der Ansprüche 1 bis 21, **dadurch gekennzeichnet, dass** die Maschine zur thermomechanischen Behandlung (10) eine Einfachschraube-Extrudier-Maschine ist.

## Claims

1. Method for the production of a porous powdered product from at least one pulverulent and/or viscous starting product, **characterized in that** the following steps are carried out continuously and without exposing the product to the open air:
a) the starting product is prepared in order to bring it into a viscous state of viscosity greater than 100 mPa.s and preferably greater than 200 mPa.s,
b) in a thermomechanical treatment machine (10) for continuously carrying out at least transport and/or mixing functions for viscous products or products rich in dry matter:
- the viscosity of the product in the viscous state is lowered without changing its content of dry matter by a first operation of intimate mixing with a gas injected into the thermomechanical treatment machine (10), and
- porosity is simultaneously initiated in the product in the viscous state;
c) continuously with the thermomechanical treatment machine (10), the intimate mixing of the product in the viscous state is intensified in a static or dynamic manner by a second operation of mixing with a gas in order to obtain an aerated and porous mass, and
d) the mass is divided in order to obtain aerated and porous particles having a content of dry matter of from 50 to 90% and a particle size less than or equal to 3 mm.

2. Method according to claim 1, **characterized in that** the product in the viscous state is prepared in the thermomechanical treatment machine (10) from at least one pulverulent product having a content of dry matter of from 70 to 98% and by carrying out at least one step of mixing with at least one ingredient and/or at least one shearing step and/or at least one heat treatment step before the viscosity of the product in the viscous state is lowered.

3. Method according to claim 1, **characterized in that** the product in the viscous state is prepared in the thermomechanical treatment machine (10) from at least one pulverulent product having a content of dry matter of from 70 to 98% and by carrying out at least one step of mixing with at least one ingredient and subsequently a step of mixing with a product in the viscous state and/or at least one shearing step and/or at least one heat treatment step before the viscosity of the product in the viscous state is lowered.

4. Method according to claim 1, **characterized in that** the product in the viscous state from the same family as the product to be obtained is prepared before it is introduced into the thermomechanical treatment machine (10), the product in the viscous state is introduced into said thermomechanical treatment machine (10) and, before the viscosity of the product in the viscous state is lowered, at least one step of mixing with at least one ingredient and/or at least one shearing step and/or at least one heat treatment step is carried out.

5. Method according to any one of claims 1 to 4, **characterized in that** the first and second operations of mixing the product in the viscous state and the gas are carried out starting from an injection of the gas.

6. Method according to claim 3 or 4, **characterized in that** the product in the viscous state from the same family as the product to be obtained has a viscosity greater than 100 mPa.s and a content of dry matter of from 50 to 90%.

7. Method according to any one of claims 1 to 6, **characterized in that** a drying of the aerated and porous particles is carried out.

8. Method according to claim 7, **characterized in that** said drying is carried out by at least one fluidized-bed dryer.

9. Method according to claim 7, **characterized in that** said drying is carried out by at least one atomizing tower.

10. Method according to claim 7, **characterized in that** said drying is carried out by a counter-current vertical dryer.

11. Method according to claim 7, **characterized in that** said drying is carried out by a conveyor dryer.

12. Method according to any one of claims 1 to 11, **characterized in that** the resulting particles have a concentration of dry matter of the order of 96%, after additional drying.

13. Method according to any one of claims 1 to 12, **characterized in that** the gas mixed with the product in the viscous state in the thermomechanical treatment machine (10) is identical with or different from the gas mixed with the product in the viscous state downstream of said machine.

14. Method according to claim 13, **characterized in that** the gas is, for example, carbon dioxide, air, steam, nitrogen or an oxide thereof.

15. Method according to any one of claims 1 to 14, **characterized in that** the percentage of gas in total injected into the thermomechanical treatment machine (10), expressed as percent by volume based on the dry mass of the product treated in said machine, is from 0.01 nl.kg⁻¹.mn⁻¹ to 10 nl.kg⁻¹.mn⁻¹.

16. Method according to any one of claims 1 to 15, **characterized in that** at least 10% of the gas mixed with the product is injected into the thermomechanical treatment machine (10).

17. Method according to any one of claims 1 to 16, **characterized in that** the product in the viscous state is milk, powdered milk thereby being obtained.

18. Method according to any one of claims 1 to 16, **characterized in that** the product in the viscous state is a natural or (physically and/or chemically) modified starchy product based on cereal (wheat, oat, maize, barley, etc.) flours, potato flour, potato granules, potato flakes and/or tapioca flour, the product initially being in the form of a mixture of the solution, suspension or emulsion type in an aqueous medium, the method yielding the product in pulverulent form.

19. Method according to any one of claims 1 to 16, **characterized in that** the product in the viscous state is a natural or (physically and/or chemically) modified protein product selected from milk casein, wheat gluten, maize zein, soybean proteins, legume proteins, in particular pea proteins and/or proteins of oleaproteaginous crops, in particular sunflower or rape, the product initially being in the form of a mixture of the solution, suspension or emulsion type in an aqueous medium, the method yielding the product in pulverulent form.

20. Method according to any one of claims 1 to 16, **characterized in that** the product in the viscous state is a milk fractionation co-product/by-product obtained by fractionating milk by centrifugation, filtration, nanofiltration, ultrafiltration and/or reverse osmosis, or a co-product obtained by coagulation of milk.

21. Method according to any one of claims 1 to 20, **characterized in that** the thermomechanical treatment machine is a machine having rotating screw(s).

22. Method according to any one of claims 1 to 21, **characterized in that** the thermomechanical treatment machine is an extrusion machine (10) having two co-rotating and co-penetrating screws.

23. Method according to claim 22, **characterized in that** the screws of the extrusion machine (10) are driven in rotation at a speed of from 50 to 1200 rpm.

24. Method according to claim 23, **characterized in that**, in a zone (C1) of the extrusion machine (10), zone in which the viscosity of the product in the viscous state is lowered and porosity is simultaneously initiated in the product in the viscous state, the ratio between the length of the screws and the diameter of said screws is from 3 to 12.

25. Method according to any one of claims 1 to 21, **characterized in that** the thermomechanical treatment machine (10) is a single-screw extrusion machine.
